# EUROPÄISCHE PATENTSCHRIFT

(11) **EP 4 130 495 B1**
(45) Veröffentlichungstag und Bekanntmachung des Hinweises auf die Patenterteilung: **28.08.2024**
(21) Anmeldenummer: 22185961.4
(22) Anmeldetag: 20.07.2022
(51) Int. Cl.: F16B 5/02, E04G 21/18, E04G 23/02, F16B 37/04

(54) **BEFESTIGUNGSSYSTEM FÜR EINE BEFESTIGUNG EINES ANBAUTEILS UND VERFAHREN ZUR BEFESTIGUNG UND JUSTIERUNG DES ANBAUTEILS**
FASTENING SYSTEM FOR FASTENING AN ATTACHMENT PART AND METHOD FOR FASTENING AND ADJUSTING THE ATTACHMENT PART
SYSTÈME DE FIXATION DESTINÉ À LA FIXATION D'UNE PIÈCE RAPPORTÉE ET PROCÉDÉ DE FIXATION ET D'AJUSTEMENT DE LA PIÈCE RAPPORTÉE

(30) Priorität: 03.08.2021 DE 102021120094
(43) Veröffentlichungstag der Anmeldung: 08.02.2023
(73) Patentinhaber: fischerwerke GmbH & Co. KG, 72178 Waldachtal (DE)
(72) Erfinder: Kromoser, Benjamin, 3300 Amstetten (AT)
(74) Vertreter: Suchy, Ulrich Johannes

(56) Entgegenhaltungen:
- EP-A1- 2 369 089
- EP-A1- 3 567 264
- CH-A5- 598 438
- DE-C1- 3 304 569
- US-B1- 6 474 855

## Beschreibung

Die Erfindung betrifft ein Befestigungssystem für eine Befestigung eines Anbauteils, insbesondere eines Rahmens aus Holz, mit den Merkmalen des Oberbegriffs des Anspruchs 1, und ein Verfahren zur Befestigung des Anbauteils, insbesondere des Rahmens aus Holz, mit den Merkmalen des Oberbegriffs des Anspruchs 12.

Die europäische Patentanmeldung EP 3 567 264 A1 offenbart ein Befestigungssystem zu einer Befestigung eines Anbauteils in einem einstellbaren Abstand an einem Befestigungsgrund mit einer Schraube, deren Schraubenkopf einen Bund nach Art einer Unterlegscheibe aufweist. Der Schraubenkopf ist drehbar und über den Bund drehbar und axialfest in Ringstufen von zwei Lochscheiben aufgenommen, die Mittellöcher der Lochscheiben konzentrisch umschließen. Die beiden Lochscheiben sind gleichachsig zu ihren Ringstufen, in denen der Bund des Schraubenkopfes einliegt, und einander zugewandt angeordnet. Die Lochscheiben weisen Schraubenlöcher zu ihrer Befestigung an dem Anbauteil auf, die um die Mittellöcher herum in den Lochscheiben angebracht sind. Zur Befestigung an dem Anbauteil werden die beiden Lochscheiben an einem Grund einer zylindrischen Senkung in dem Anbauteil derart festgeschraubt, dass ein Schraubenschaft ein mit der Senkung gleichachsiges Durchgangsloch durch das Anbauteil durchsetzt. Zur Befestigung des Anbauteils wird die Schraube in ein Sackloch in dem Befestigungsgrund geschraubt. Durch Drehen der Schraube lässt sich der Abstand des Anbauteils vom Befestigungsgrund einstellen.

Zudem ist aus der europäischen Patentanmeldung EP 2 369 089 A1 ein Befestigungssystem bekannt, mit einem Befestiger, der an einem Befestigungsgrund festlegbar ist. Am Befestiger ist einstückig ein Halter mit einem Innengewinde angeordnet, in den eine Gewindestange eingeschraubt wird, die zwei Gewindeteile aufweist. An dem freien, dem Halter abgewandten, Gewindeteil wird ein Anbauteil angeordnet, dessen Abstand vom Befestigungsgrund mit Hilfe einer Mutter und eines Befestigungsclips einstellbar ist.

Aufgabe der Erfindung ist, ein alternatives Befestigungssystem für eine Befestigung eines Anbauteils in einem einstellbaren Abstand an einem Befestigungsgrund vorzuschlagen. Das Befestigungssystem ist insbesondere zu einer Befestigung von vorgefertigten Holzrahmen, welche zur thermischen Fassadensanierung von Altbauten dienen, vorgesehen. Entsprechendes Dämmmaterial kann in die Holzrahmen bereits während der Vorfertigung der Rahmen oder nachträglich, wenn die Rahmen an dem zu sanierenden Bauwerk angebracht sind, eingebracht werden. Die Wand des zu sanierenden Gebäudes bildet hierbei den Befestigungsgrund. Das Befestigungssystem kann jedoch auch zu einer Befestigung von Fensterrahmen, Türrahmen und dergleichen Rahmen aus Holz an, in, hinter oder vor Maueröffnungen von Gebäuden vorgesehen sein, wobei der Rahmen senkrecht zu einer Gebäudewand verstellbar und parallel zur Gebäudewand ausrichtbar sein soll. Dabei bildet die Gebäudewand den Befestigungsgrund. Des Weiteren ist die Erfindung auf ein Verfahren zur Befestigung des Anbauteils an dem Befestigungsgrund gerichtet.

Diese Aufgabe wird erfindungsgemäß durch die Merkmale der Ansprüche 1 und 12 gelöst.

Das erfindungsgemäße Befestigungssystem weist einen Schaft mit einem ersten Gewinde an einem ersten Ende und einem zweiten Gewinde an einem zweiten Ende des Schafts auf. Vorgesehen ist, dass der Schaft an einander fernen Enden der Gewinde endet. Nicht ausgeschlossen ist, dass sich der Schaft über eines oder beide der Gewinde hinweg fortsetzt, wobei der Schaft in den überstehenden Abschnitten radial nicht über einen Kerndurchmesser des jeweiligen Gewindes überstehen oder jedenfalls so ausgebildet sein soll, dass sich eine Mutter auf das Gewinde schrauben lässt. Möglich ist auch ein Schaft mit einem durchgehenden Gewinde, das die beiden Gewinde an den beiden Enden des Schafts bildet.

Des Weiteren weist der Schaft ein axiales Widerlager auf, das dem zweiten Gewinde zugeordnet ist. Das Widerlager befindet sich an einem dem ersten Gewinde zugewandten Ende des zweiten Gewindes oder kann auch einen axialen Abstand von dem zweiten Gewinde aufweisen.

Auf das erste Gewinde des Schafts des erfindungsgemäßen Befestigungssystems ist eine Mutter geschraubt, die mit einem ersten Befestiger drehbar und axialfest gehalten ist. Der erste Befestiger kann beispielsweise nach Art eines Axiallagers, insbesondere nach Art eines Axialgleitlagers, für die Mutter ausgebildet sein, wobei die Mutter vorzugsweise durch Reibung gegen unbeabsichtigtes Drehen gehalten ist, so dass sie sich nicht von selbst dreht, aber von Hand und vorzugsweise mit beispielsweise einem Schraubenschlüssel drehen lässt. Der erste Befestiger ist an dem Anbauteil festlegbar derart, dass die Mutter drehbar und axialfest in Bezug auf ihre Achse an dem Anbauteil angeordnet ist. Ist der erste Befestiger an dem Anbauteil festgelegt und wird die Mutter auf dem Schaft, genauer formuliert auf dem ersten Gewinde des Schafts, gedreht, sorgt der erste Befestiger, der die Mutter drehbar und axialfest hält, dafür, dass die Bewegung der Mutter entlang des Schafts unmittelbar auf das Anbauteil übertragen wird. Somit kann durch die Drehung der Mutter das Anbauteil relativ zum Schaft verstellt und somit der Abstand zwischen dem Anbauteil und dem Befestigungsgrund eingestellt werden. Unter "drehbar und axialfest hält" ist also zu verstehen, dass der erste Befestiger eine Drehung der Mutter bezüglich des Schafts zulässt und sich bei der Drehung der Mutter auf dem Schaft zusammen mit der Mutter entlang des Schafts bewegt. Der erste Befestiger kann einteilig oder mehrteilig sein. Auf eine besonders bevorzugte Ausgestaltung eines mehrteiligen ersten Befestigers wird im Folgenden noch genauer eingegangen. Das Anbauteil ist wie oben beschrieben insbesondere ein Holzrahmen mit einem Aufnahmeraum zur Aufnahme von Dämmmaterial.

Ein zweiter Befestiger des erfindungsgemäßen Befestigungssystems weist eine Befestigungsfläche auf, mit der der Befestiger an dem Befestigungsgrund festlegbar ist. Der Befestigungsgrund ist, wie oben beschrieben, insbesondere eine zu sanierende Gebäudewand eines Altbaus, an der der Rahmen mithilfe des erfindungsgemäßen Befestigungssystems befestigt wird. Insbesondere werden eine Mehrzahl derartiger Rahmen über- und/oder nebeneinander an der zu sanierenden Gebäudewand mit den erfindungsgemäßen Befestigungssystemen befestigt.

Die Befestigungsfläche des zweiten Befestigers kann eine tatsächliche, insbesondere ebene Oberfläche des zweiten Befestigers sein, wobei eine Festlegung des zweiten Befestigers mit der Befestigungsfläche an dem Befestigungsgrund anliegend vorgesehen ist. Die Befestigungsfläche kann beispielsweise auch eine gedachte Ebene sein, die durch drei, vier oder mehr Befestigungspunkte definiert ist. Die Befestigungspunkte sind beispielsweise Noppen, Füße oder dergleichen, die an dem Befestigungsgrund anliegen, wenn der zweite Befestiger des erfindungsgemäßen Befestigungssystems wie vorgesehen an dem Befestigungsgrund festgelegt ist.

Der zweite Befestiger weist eine Haltefläche auf, die der Befestigungsfläche zugewandt ist. Ist der zweite Befestiger wie vorgesehen an dem Befestigungsgrund festgelegt, ist die Haltefläche dem Befestigungsgrund zugewandt. Vorzugsweise sind die Haltefläche und die Befestigungsfläche zueinander parallele Flächen. Die Haltefläche und die Befestigungsfläche weisen einen Abstand oder einen Versatz zueinander auf derart, dass die Haltefläche einen Abstand von dem Befestigungsgrund aufweist, wenn der zweite Befestiger wie vorgesehen mit der Befestigungsfläche an dem Befestigungsgrund anliegend an dem Befestigungsgrund festgelegt ist.

Des Weiteren weist der zweite Befestiger eine Ausnehmung für den Schaft auf, die beispielsweise ein Loch oder ein Langloch sein kann. Die Ausnehmung kann jedoch beispielsweise auch als Mehrkant ausgestaltet sein.

Auf das zweite Gewinde des Schafts ist ein Halter geschraubt, der ein auf das zweite Gewinde schraubbares Innengewinde aufweist. Der Halter kann beispielsweise eine Platte oder eine Scheibe mit einem Innengewindeloch sein. Der Versatz beziehungsweise der Abstand der Haltefläche von der Befestigungsfläche des zweiten Befestigers ist mindestens so groß wie, insbesondere größer als der Halter in Richtung einer Achse seines Innengewindes dick ist. Dadurch ist gewährleistet, dass der Halter zwischen der Haltefläche und der Befestigungsfläche, insbesondere mit Spiel, anordenbar ist, wenn der Befestiger, wie vorgesehen, mit der Befestigungsfläche am Befestigungsgrund angeordnet ist. Wenn die Mutter auf das erste Gewinde und der Halter auf das zweite Gewinde des Schafts geschraubt sind, sind sie koaxial zum Schaft, so dass ein Muttergewinde der Mutter, das Innengewinde des Halters und die beiden Gewinde des Schafts gleichachsig sind. Die Achsen können auch als Achse des erfindungsgemäßen Befestigungssystems aufgefasst werden.

Der Schaft des erfindungsgemäßen Befestigungssystems ist in die Ausnehmung des zweiten Befestigers derart einbringbar, dass er die Ausnehmung durchgreift, der Halter sich zwischen der Befestigungsfläche und der Haltefläche des zweiten Befestigers befindet und die Haltefläche hintergreift, respektive mit dieser in Anlage ist, derart, dass der Schaft gegen axialen Zug von der Befestigungsfläche weg am zweiten Befestiger gehalten ist, und sich das Widerlager auf einer der Befestigungsfläche abgewandten Außenseite des zweiten Befestigers befindet, derart, dass es den Schaft gegen axialen Druck in Richtung der Befestigungsfläche am zweiten Befestiger abstützt. Auf diese Weise ist das Anbauteil in axialer Richtung des Schafts des erfindungsgemäßen Befestigungssystems am Befestigungsgrund gehalten. Durch Einschrauben des Schafts in den Halter lässt sich der zweite Halter mit seiner Haltefläche und der Außenseite zwischen dem Halter und dem Widerlager festspannen, wodurch eine Beweglichkeit in axialer Richtung des Schafts beseitigt und der Schaft gegen eine Bewegung radial zu seiner Achse am zweiten Befestiger festgelegt ist. Außerdem wird der Schaft durch das Festspannen am zweiten Befestiger gegen Mitdrehen mit der Mutter festgelegt, derart, dass, wie erwähnt, durch Drehen der Mutter auf dem ersten Gewinde des Schafts in Zusammenspiel mit dem ersten Befestiger der Abstand des Anbauteils vom Befestigungsgrund einstellbar ist. Durch eine Anordnung mehrerer erfindungsgemäßer Befestigungssysteme beispielsweise an oder nahe an Ecken des Rahmens lässt sich nicht nur der Abstand des Rahmens senkrecht zum Befestigungsgrund einstellen, sondern der Rahmen auch parallel zum Befestigungsgrund ausrichten. Zur parallelen Ausrichtung wird der Schaft nicht endfest am zweiten Befestiger festgelegt. Genauer formuliert sind das Widerlager und der Halter nicht am zweiten Befestiger festgeklemmt, derart, dass der Schaft parallel zum Befestigungsgrund, respektive parallel zur Außenseite beziehungsweise der Haltefläche des zweiten Befestigers verstellt werden kann. Erst wenn eine gewünschte Position erreicht ist, wird, wie oben beschrieben, der Schaft am zweiten Befestiger festgeklemmt.

In einer Ausgestaltung der Erfindung ist die Ausnehmung an einem Ende offen, beispielsweise ist sie ein an einem Ende offenes Langloch im zweiten Befestiger. Der zweite Befestiger wird insbesondere so an dem Befestigungsgrund festgelegt, dass sich das offene Ende der Ausnehmung oben oder auch schräg oben befindet, derart, dass der Schaft radial zu seiner Achse von oben oder schräg von oben in die Ausnehmung des zweiten Befestigers einbringbar ist. "Von oben" bedeutet in Richtung der Schwerkraft, wenn der zweite Befestiger wie vorgesehen am Befestigungsgrund festgelegt ist.

Radial zum Schaft ist die Ausnehmung des zweiten Befestigers größer als ein Durchmesser des Schafts derart, dass der Schaft, wie beschrieben, radial zu seiner Achse und vorzugsweise zweidimensional in der Ausnehmung des zweiten Befestigers beweglich ist. Das ermöglicht eine Ausrichtung des Anbauteils radial zum Schaft in Bezug zum Befestigungsgrund und einen Toleranzausgleich.

Der Halter des erfindungsgemäßen Befestigungssystems ist vorzugsweise durch Formschluss gegen Drehen um die Achse seines Innengewindes an dem zweiten Befestiger gehalten, um das zweite Gewinde des Schafts durch Drehen in das Innengewinde des Halters schrauben und den Schaft und mit dem Schaft das Anbauteil durch Drehen des Schafts in beiden Richtungen axial bewegen zu können. Ein begrenztes Mitdrehen des Halters mit dem Schaft ist erfindungsgemäß möglich, der zweite Befestiger hält den Halter durch den Formschluss allerdings spätestens nach einer begrenzten Drehung um die Achse in beiden Drehrichtungen gegen weiteres Mitdrehen. Beispielsweise kann der Halter einen mehreckigen Umfang aufweisen, länglich sein, das Innengewindeloch nicht in seiner Mitte aufweisen oder nicht kreisrund sein derart, dass er vorzugsweise radial zur Achse seines Innengewindes begrenzt bezüglich des zweiten Befestigers beweglich ist, derart dass mit dem Halter auch der Schaft radial zu seiner Achse in Bezug auf den zweiten Befestiger beweglich ist, und dass trotzdem eine Ecke oder allgemein eine Umfangsstelle mit großem radialem Abstand vom Innengewindeloch des Halters bei einer Drehung des Halters um die Achse seines Innengewindes an einer Stelle gegen den zweiten Befestiger stößt und dadurch durch Formschluss gegen Weiterdrehen gehalten ist.

Für eine Aufnahme des Halters sieht eine Ausgestaltung der Erfindung eine an die Haltefläche angrenzende, schlitzförmige Aufnahme für den Halter an oder in dem zweiten Befestiger vor, die senkrecht zur Haltefläche mindestens so breit wie der Halter axial zu seinem Innengewinde dick ist. Die schlitzförmige Aufnahme ist an derselben Seite offen, wie die an ihrem einen Ende offene, insbesondere langlochartige, Ausnehmung, derart, dass der Schaft durch das offene Ende in die Ausnehmung des zweiten Befestigers einbringbar ist, wobei zugleich der Halter, wenn er auf das zweite Gewinde des Schafts geschraubt ist, in die schlitzförmige Aufnahme des zweiten Befestigers gelangt. Senkrecht zur Haltefläche geht die Ausnehmung in die schlitzförmige Aufnahme über, die Ausnehmung bildet sozusagen einen Durchbruch von der schlitzförmigen Aufnahme auf der Seite der Haltefläche zu der der Haltefläche abgewandten Außenseite des zweiten Befestigers. Die schlitzförmige Aufnahme und der Halter sind derart aufeinander abgestimmt, dass sich der Halter in der Aufnahme zusammen mit dem Schaft zumindest geringfügig parallel zur Haltefläche bewegen lässt, wodurch weiterhin eine Ausrichtung des Anbauteils ermöglicht ist.

Um zwei Anbauteile, beispielsweise Holzrahmen, mit einem erfindungsgemäßen Befestigungssystem nebeneinander an dem Befestigungsgrund befestigen zu können, sieht eine Ausgestaltung der Erfindung einen zweiten Befestiger mit zwei, insbesondere identischen Ausnehmungen in einem Abstand nebeneinander vor. Insbesondere weist dieser zweite Befestiger auch zwei insbesondere identische schlitzförmige Aufnahmen in einem Abstand nebeneinander auf.

Eine Ausgestaltung der Erfindung sieht einen zweiten Befestiger mit einem Grundteil und einer Wandung vor, wobei das Grundteil die Befestigungsfläche und die Wandung die Haltefläche und die Ausnehmung für den Schaft aufweist. Die schlitzförmige Aufnahme für den Halter befindet sich bei dieser Ausgestaltung der Erfindung zwischen dem Grundteil und der Wandung des zweiten Befestigers. Insbesondere bildet eine dem Grundteil zugewandte Seite der Wandung die Haltefläche und begrenzt zugleich die schlitzförmige Aufnahme für den Halter auf einer dem Grundteil gegenüberliegenden Seite.

Eine Ausgestaltung der Erfindung sieht eine Bundmutter vor, die als Mutter auf das erste Gewinde des Schafts geschraubt ist. Die Bundmutter weist einen umlaufenden, radial abstehenden, flanschartigen Bund an einer Stirnseite der Mutter auf, wie dies bei Bundmuttern üblich ist, oder unüblich zwischen Stirnseiten der Mutter. Die Bundmutter ist drehbar in gleichachsigen oder jedenfalls einander überdeckenden Löchern von zwei Lochscheiben angeordnet, zwischen denen der Bund der Bundmutter axial gehalten ist. Die beiden Lochscheiben bilden den ersten, bevorzugten mehrteiligen Befestiger oder sind Teil des ersten Befestigers, der an dem Anbauteil festlegbar ist und der in diesem Fall die Bundmutter drehbar und axialfest hält. Die beiden Lochscheiben umschließen sandwichartig somit beidseitig mit Spiel den Bund der Bundmutter und sind zueinander und zum Anbauteil festgelegt. Somit wird eine Drehung der Bundmutter auf dem ersten Gewinde in Richtung oder entgegengesetzt zum Befestigungsgrund unmittelbar auf den ersten Befestiger übertragen, wodurch das Anbauteil zum Befestigungsgrund hin- oder von diesem wegbewegbar ist.

Vorzugsweise weist der Schaft an seinem ersten Ende einen Werkzeugsitz zu einem durch Formschluss drehfesten Ansetzen eines Drehantriebswerkzeugs, beispielsweise eines Schraubenschlüssels, einer Stecknuss oder eines Schraubbits auf. Der Werkzeugsitz kann beispielsweise ein Schlitz, Kreuzschlitz, Innenmehrkant, Innenstern, Außenmehrkant sein oder zwei achsparallele Parallelflächen aufweisen. Durch den Werkzeugsitz lässt sich der Schaft an seinem anbauteilseitigen ersten Ende, das normalerweise zum Ansetzen des Drehantriebswerkzeugs zugänglich ist, drehend antreiben und dadurch der zweite, am Befestigungsgrund festlegbare oder festgelegte Befestiger zwischen dem Halter und dem Widerlager, respektive der Schaft am zweiten Befestiger, festspannen.

Vorzugsweise weist das Anbauteil ein Durchgangsloch für den Schaft des erfindungsgemäßen Befestigungssystems und eine Vertiefung auf, an deren Grund das Durchgangsloch mündet und der erste Befestiger festlegbar ist. Vorzugsweise steht das erfindungsgemäße Befestigungssystem nicht über eine dem Befestigungsgrund abgewandte Seite des Anbauteils über.

In einer weiteren bevorzugten Ausgestaltung der Erfindung weist der zweite Befestiger ein Auflager zum Aufstellen des Anbauteils auf. Das Auflager dient zum einen dazu, das Anbauteil, insbesondere den Holzrahmen, vor der eigentlichen Montage am Befestigungsgrund abzusetzen. Zum anderen kann das Auflager die Gewichtskraft des Anbauteils nach der Montage dauerhaft sicher in den Befestigungsgrund einleiten. Insbesondere ist das Auflager derart am zweiten Befestiger angeordnet, dass, wenn das Anbauteil auf dem Auflager aufgelegt ist, der oder die Schäfte mit dem oder den Ausnehmungen zumindest annähernd fluchten. Das Gewicht des Anbauteils lastet zumindest teilweise auf dem Auflager und muss nicht anderweitig abgetragen werden. Ein Benutzer des Befestigungssystems kann sich folglich darauf konzentrieren, das Anbauteil bezüglich des Befestigungsgrunds zu justieren. Insbesondere weist das Auflager eine L-förmige Gestalt auf, wobei ein erster Schenkel parallel zur Haltefläche orientiert ist, mit welchem das Auflager am zweiten Befestiger befestigt, insbesondere angeschraubt ist. Ein zweiter Schenkel erstreckt sich insbesondere orthogonal zum ersten Schenkel und dient als eigentliches Auflager für das Anbauteil.

Zur Befestigung und Justierung des Anbauteils in einem gewünschten Abstand von dem Befestigungsgrund sieht die Erfindung vor, den ersten Befestiger an dem Anbauteil und den zweiten Befestiger an dem Befestigungsgrund festzulegen, wobei eine Reihenfolge der Verfahrensschritte zweitrangig und folglich vertauschbar ist. Vorzugsweise ist oder wird der Schaft mit seinem ersten Gewinde in die Mutter geschraubt, die drehbar und axialfest an dem ersten Befestiger gehalten ist. Der Halter ist vorzugsweise mit seinem Innengewinde auf das zweite Ende des Schafts geschraubt, wobei es auch möglich ist, dass der Halter an dem zweiten Befestiger angeordnet und dort der Schaft mit seinem zweiten Gewinde in das Innengewinde des Halters geschraubt wird. Der Schaft des erfindungsgemäßen Befestigungssystems wird in die Ausnehmung des zweiten Befestigers eingebracht, wobei im Falle der an einem Ende offenen Ausnehmung der Schaft vorzugsweise durch das offene Ende in die Ausnehmung eingebracht wird. Mit dem Einbringen des Schafts in die Ausnehmung des zweiten Befestigers gelangt der Halter, wenn er auf das zweite Gewinde des Schafts geschraubt ist, zwischen die Haltefläche des zweiten Befestigers und den Befestigungsgrund, das heißt in Hintergriff an der Haltefläche des zweiten Befestigers. Das Widerlager gelangt auf die Außenseite des zweiten Befestigers, wodurch eine Vormontageposition des erfindungsgemäßen Befestigungssystems gebildet ist, in welcher der erste Befestiger mit dem Anbauteil bezüglich dem zweiten Befestiger, der an dem Befestigungsgrund festgelegt ist, sowohl in axialer Richtung des Schafts als auch zweidimensional radial zum Schaft beweglich, das heißt ein- und verstellbar ist. In der Vormontageposition lässt sich das Anbauteil in Bezug auf den Befestigungsgrund, genauer formuliert parallel zum Befestigungsgrund, ausrichten. Insbesondere lastet das Gewicht des Anbauteils in der Vormontageposition auf dem oben beschrieben Auflager und das Anbauteil kann horizontal auf dem Auflager verschoben und beispielsweise mit Hilfe von Keilen in seiner vertikalen Position eingestellt werden.

Zum Festspannen des Schafts an dem zweiten Befestiger, der an dem Befestigungsgrund festgelegt ist, schlägt die Erfindung vor, den Schaft so zu drehen, dass der zweite Befestiger zwischen dem Halter und dem Widerlager eingespannt und somit der Schaft selbst am zweiten Befestiger festgespannt wird. Auf diese Weise werden der Schaft am Befestigungsgrund und das Anbauteil in radialer Richtung zum Schaft am Befestigungsgrund festgelegt.

Der Abstand des Anbauteils vom Befestigungsgrund wird anschließend durch Drehen der Mutter auf dem ersten Gewinde des Schafts eingestellt. Durch das vorangegangene Festspannen des Schafts am zweiten Befestiger ist der Schaft beim Drehen der Mutter drehfest gehalten.

Der Schaft des erfindungsgemäßen Befestigungssystems kann in die Ausnehmung des zweiten Befestigers eingebracht und danach die Mutter auf das erste Gewinde des Schafts geschraubt werden. Es kann auch umgekehrt die Mutter auf das erste Gewinde des Schafts geschraubt und danach der Schaft in die Ausnehmung des zweiten Befestigers eingebracht werden, der zuvor am Befestigungsgrund festgelegt wird.

Es sind Ausführungen der Erfindung möglich, die nicht alle Merkmale eines abhängigen Anspruchs aufweisen.

Die Erfindung wird nachfolgend anhand zweier in der Zeichnung dargestellter Ausführungsbeispiele näher erläutert. Es zeigen:
- Figur 1: eine perspektivische Explosionsdarstellung eines ersten Ausführungsbeispiels eines Befestigungssystems gemäß der Erfindung;
- Figur 2: eine Befestigung eines Anbauteils an einem Befestigungsgrund mit dem Befestigungssystem aus Figur 1 in einer perspektivischen Darstellung;
- Figur 3: eine perspektivische Explosionsdarstellung eines zweiten Ausführungsbeispiels eines Befestigungssystems gemäß der Erfindung; und
- Figur 4: eine Befestigung eines Anbauteils an einem Befestigungsgrund mit dem Befestigungssystem aus Figur 3 in einer perspektivischen Darstellung.

Grundsätzlich sind in den Figuren gleiche Teile mit gleichen Bezugszahlen versehen.

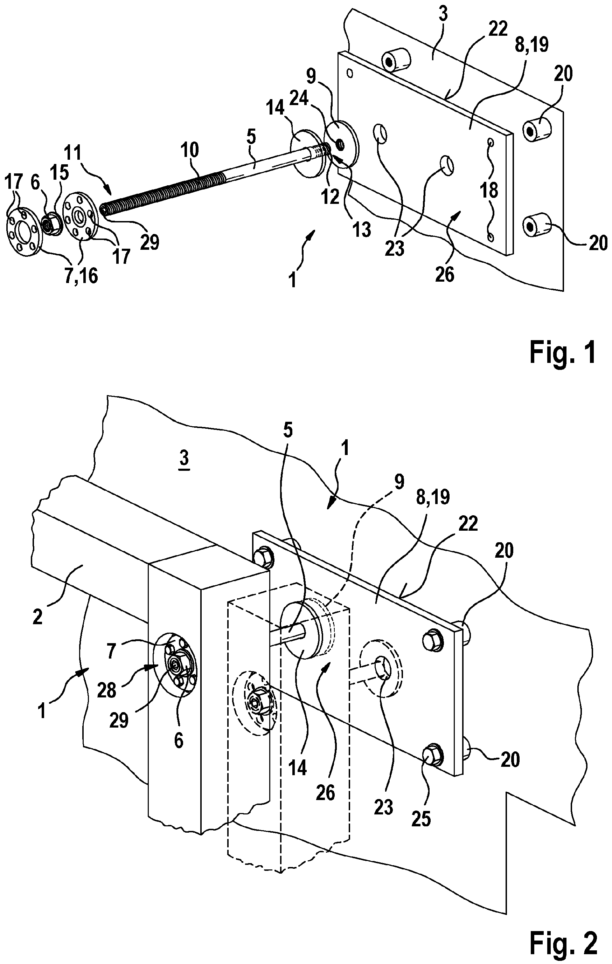

Das in Figur 1 dargestellte, erfindungsgemäße Befestigungssystem 1 ist zu einer Befestigung eines Anbauteils 2 in einem einstellbaren Abstand an einem Befestigungsgrund 3 vorgesehen. Das Befestigungssystem 1 ist insbesondere aus Stahl hergestellt. In Figur 2 ist ein rechteckiger Rahmen aus Holz zur Sanierung eines Altbaus als Anbauteil 2 mit dem Befestigungssystem 1 in dem einstellbaren Abstand vor einer Gebäudewand als Befestigungsgrund 3 gezeigt. Der rechteckige Rahmen dient zur Aufnahme von Dämmstoffmaterial (nicht dargestellt). Das Befestigungssystem 1 weist einen Schaft 5, eine Mutter mit einem umlaufenden Bund 15, also eine sogenannte Bundmutter 6, einen ersten mehrteiligen Befestiger 7, einen zweiten Befestiger 8 und einen Halter 9 auf.

Im Ausführungsbeispiel ist der Schaft 5 eine zylindrische Stange, wobei diese Form nicht zwingend für die Erfindung ist. Der Schaft 5 weist ein erstes Gewinde 10 an einem ersten Ende 11 des Schafts 5 und ein zweites Gewinde 12 an einem zweiten Ende 13 des Schafts 5 auf. An einem dem ersten Gewinde 10 zugewandten Ende des zweiten Gewindes 12 weist der Schaft 5 ein axiales Widerlager 14 auf. Im Ausführungsbeispiel ist das Widerlager 14 eine auf den Schaft 5 aufgesetzte und mit dem Schaft 5 verschweißte Lochscheibe. Andere axiale Widerlager sind möglich.

Die Bundmutter 6 ist im Ausführungsbeispiel eine Sechskant-Bundmutter mit einem umlaufenden, radial überstehenden, kreisrunden Bund 15, die auf das erste Gewinde 10 des Schafts 5 geschraubt ist oder wird.

Der erste mehrteilige Befestiger 7 weist im Ausführungsbeispiel zwei deckungsgleich angeordnete Lochscheiben 16 auf, in deren Mittelloch sich die Bundmutter 6 befindet. An einander zugewandten und aneinander anliegenden Stirnseiten weisen die beiden Lochscheiben 16 die Mittellöcher konzentrisch umschließende, kreisförmige und umlaufende Ringstufen auf, in denen der Bund 15 der Bundmutter 6 drehbar und axialfest aufgenommen ist. Die beiden den ersten Befestiger 7 bildenden Lochscheiben 16 halten die Bundmutter 6 an ihrem Bund 15 nach Art eines Axialgleitlagers mit der Maßgabe einer Reibung zwischen dem Bund 15 der Bundmutter 6 und den Lochscheiben 16 derart, dass sich die Bundmutter 6 nicht von selbst dreht, aber von Hand oder jedenfalls mit einem Schraubenschlüssel gedreht werden kann.

Um ihre Mittellöcher herum weisen die beiden Lochscheiben 16 deckungsgleiche Schraubenlöcher 17 zu einer Festlegung der den ersten Befestiger 7 bildenden Lochscheibe 16 an dem Anbauteil 2 auf.

Der zweite Befestiger 8 weist im Ausführungsbeispiel eine rechteckige Platte 19 mit Befestigungsschraubenlöchern 18 zu einer Festlegung an dem Befestigungsgrund 3 auf. Als Füße 20 sind Zylinder mit axialen Durchgangslöchern konzentrisch zu den Befestigungsschraubenlöchern 18 auf einer Seite der Platte 19 des zweiten Befestigers 8 angeordnet, wobei der Platte abgewandte Stirnenden der Füße 20 eine im Ausführungsbeispiel ebene und zu der Platte 19 parallele Befestigungsfläche 21 des zweiten Befestigers 8 definieren.

Die Seite der Platte 19, auf der sich die Füße 20 befinden, bildet eine Haltefläche 22 des ersten Befestigers 8. Die Befestigungsfläche 21 und die Haltefläche 22 sind parallel zueinander, wobei die Haltefläche 22 einen Abstand von der Befestigungsfläche 21 aufweist.

Die Platte 19 des zweiten Befestigers 8 weist ein - im Ausführungsbeispiel kreisförmiges - Loch als Ausnehmung 23 für den Schaft 5 auf. Ein Durchmesser des Lochs ist größer als ein Durchmesser des Schafts 5, beziehungsweise als ein Außendurchmesser des zweiten Gewindes 12 des Schafts 5 derart, dass der Schaft 5 radial zweidimensional Spiel in der Ausnehmung 23 aufweist, das heißt der Schaft 5 ist in einer durch die Platte 19 definierten Ebene beziehungsweise parallel zur Befestigungsfläche 21 zweidimensional beweglich.

Im Ausführungsbeispiel weist der zweite Befestiger 8 ein zweites Loch als Ausnehmung 23 für einen zweiten Schaft 5 zu einer Befestigung von zwei Anbauteilen 2 nebeneinander auf, wie in Figur 2 dargestellt.

Der Halter 9 ist im Ausführungsbeispiel eine Lochscheibe, deren Mittelloch ein Innengewinde 24 aufweist, mit dem der Halter 9 auf das zweite Gewinde 12 des Schafts 5 schraubbar beziehungsweise geschraubt ist.

Zur Befestigung des Anbauteils 2 an dem Befestigungsgrund 3 wird erfindungsgemäß der zweite Befestiger 8 an dem Befestigungsgrund 3 festgelegt. Im Ausführungsbeispiel werden dazu Befestigungsschrauben 25 durch die Schraubenlöcher 18 in der Platte 19 des zweiten Befestigers 8 und durch die Füße 20 in den Befestigungsgrund 3 geschraubt und der zweite Befestiger 8 gegen den Befestigungsgrund 3 gespannt. Durch die Füße 20 besteht ein Abstand zwischen der dem Befestigungsgrund 3 zugewandten Seite der Platte 19 des zweiten Befestigers 8 und damit zwischen der Haltefläche 22 des zweiten Befestigers 8 und dem Befestigungsgrund 3.

Das zweite Gewinde 12 des Schafts 5 des erfindungsgemäßen Befestigungssystems 1 wird durch eine der beiden Ausnehmungen 23 in der Platte 19 des zweiten Befestigers 8 gesteckt und in das Innengewinde 24 des Halters 9 geschraubt, der an der Haltefläche 22 des zweiten Befestigers 8 und damit zwischen der Haltefläche 22 und der Befestigungsfläche 21 des zweiten Befestigers 8 angeordnet wird. Es befindet sich das Widerlager 14 auf einer der Haltefläche 22 und dem Befestigungsgrund 3 abgewandten Außenseite 26 des zweiten Befestigers 8 und der Halter 9 an der Haltefläche 22. Der Halter 9 hintergreift die Haltefläche 22 des zweiten Befestigers 8. Die Platte 19 des zweiten Befestigers 8 befindet sich zwischen dem axialen Widerlager 14 des Schafts 5 und dem Halter 9, der auf das zweite Gewinde 12 am zweiten Ende 13 des Schafts 5 geschraubt ist.

Die beiden Lochscheiben 16, die den ersten Befestiger 7 des erfindungsgemäßen Befestigungssystems 1 bilden, werden mit Schrauben 27, die durch die Schraubenlöcher 17 gesteckt und an einem Grund einer Vertiefung 28 in das Anbauteil 2 geschraubt werden, an dem Anbauteil 2 festgelegt. Im ersten Ausführungsbeispiel ist die Vertiefung 28 eine zylindrische Senkung, von deren Grund ein Durchgangsloch für den Schaft 5 das Anbauteil 2 durchsetzt. Das Anbauteil 2 wird mit seinem Durchgangsloch auf den Schaft 5 aufgesetzt. Durch Drehen der Bundmutter 6, die in dem ersten Befestiger 7, genauer formuliert zwischen den beiden Lochschreiben 16 drehbar ist, wird die Bundmutter 6 auf das erste Gewinde 10 des Schafts 5 geschraubt.

Nach einem zweidimensionalen Ausrichten des Anbauteils 2 parallel zur Befestigungsfläche 21 wird durch Drehen des Schafts 5 der auf das zweite Gewinde 12 des Schafts 5 geschraubte Halter 9 gegen die Haltefläche 22 des zweiten Befestigers 8 gespannt, wodurch der zweite Befestiger 8 zwischen dem Widerlager 14 und dem Halter 9 festgespannt wird. Der Schaft 5 ist dadurch am zweiten Befestiger 8 festgelegt und auch drehfest gehalten. Zum Drehen weist der Schaft 5 an seinem ersten Ende 11 einen Werkzeugsitz 29 zu einem durch Formschluss drehfesten Ansetzen eines nicht dargestellten Drehantriebswerkzeugs, beispielsweise eines Schraubenschlüssels, auf. Im Ausführungsbeispiel weist der Schaft 5 einen Innenstern oder einen Innensechskant als Werkzeugsitz 29 in der Stirnseite seines ersten Endes 11 auf. Möglich sind beispielsweise auch ein Schlitz, Kreuzschlitz oder ein Außenmehrkant als Werkzeugsitz (nicht dargestellt). Die Aufzählung ist nicht abschließend.

Nach dem Festspannen des Schafts 5 an dem zweiten Befestiger 8 durch Drehen des Schafts 5 und Einschrauben seines zweiten Gewindes 12 in das Innengewinde 24 des Halters 9, durch das der Schaft 5 drehfest an dem zweiten Befestiger 8 festgespannt wird, wird durch Drehen der Bundmutter 6 auf dem ersten Gewinde 10 des Schafts 5 der Abstand des Anbauteils 2 vom Befestigungsgrund 3 eingestellt.

Der Schaft 5 und die Bundmutter 6 stehen nicht aus der Vertiefung 28 im Anbauteil 5 vor, sondern sind in der Vertiefung 28 versenkt oder allenfalls bündig mit dem Anbauteil 5.

Ein weiteres Anbauteil 2 kann wie in Figur 2 mit Strichlinien dargestellt neben dem mit Volllinien gezeichneten Anbauteil 2 mit einem weiteren Schaft 5 und einem weiteren ersten Befestiger 7 an der weiteren Ausnehmung 23 der Platte 19 des zweiten Befestigers 8 festgelegt werden.

Eine Reihenfolge der Verfahrensschritte zur Befestigung des Anbauteils 2 mit dem erfindungsgemäßen Befestigungssystem 1 an dem Befestigungsgrund 3 kann geändert werden.

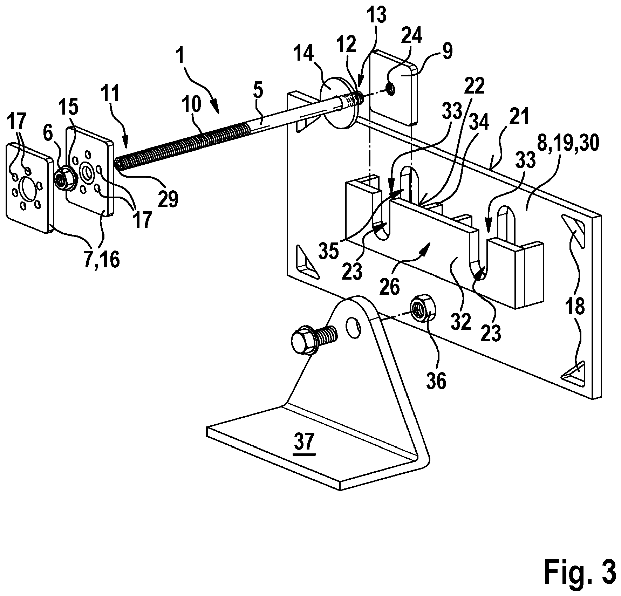

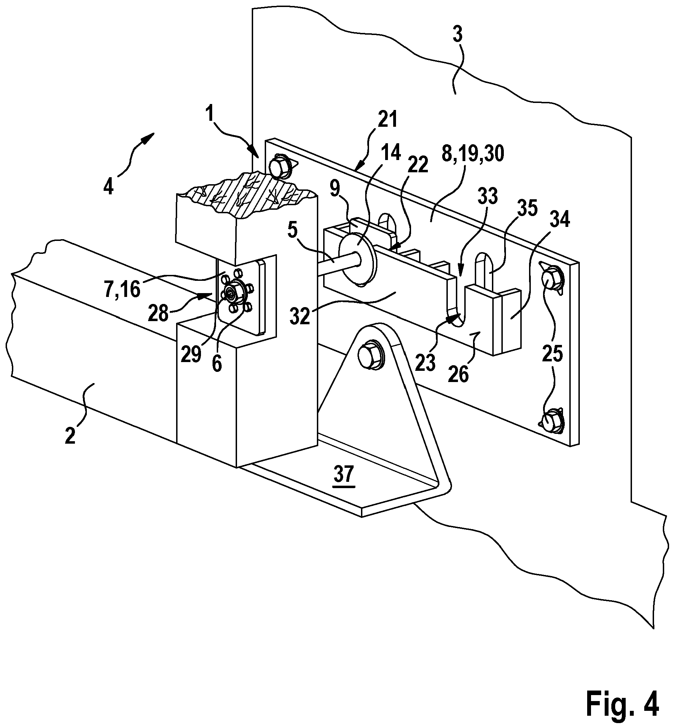

Im Vergleich mit Figuren 1 und 2 ist bei dem in Figuren 3 und 4 dargestellten erfindungsgemäßen Ausführungsbeispiel des Befestigungssystems 1 insbesondere der zweite Befestiger 8 geändert. Er weist eine - im Ausführungsbeispiel rechteckige - Platte als Grundteil 30 auf, deren eine Seite die Befestigungsfläche 21 bildet, mit der der zweite Befestiger 8 am Befestigungsgrund 3 anliegend am Befestigungsgrund 3 festgelegt wird.

An einer der Befestigungsfläche 21 gegenüberliegenden Vorderseite des Grundteils 30 des zweiten Befestigers 8 ist eine streifenförmige Wandung 32 in einem Abstand von der Vorderseite des Grundteils 30 angeordnet, der mindestens so groß und vorzugsweise etwas größer als der Halter 9 in axialer Richtung dick ist. Im Ausführungsbeispiel ist der Abstand zwischen der Vorderseite des Grundteils 30 und der Wandung 32 etwa 1,5 bis 2 mal so groß wie der Halter 9 in axialer Richtung dick ist. Dadurch ist eine schlitzförmige Aufnahme 33 zwischen dem Grundteil 30 und der Wandung 32 für den Halter 9 gebildet. Eine dem Grundteil 30 zugewandte Rückseite der Wandung 32 bildet die Haltefläche 22 für den Hintergriff des Halters 9 und eine dem Grundteil 30 abgewandte Vorderseite bildet die Außenseite 26 zur axialen Abstützung des Widerlagers 14 des Schafts 5 des erfindungsgemäßen Befestigungssystems 1.

Durch Stege 34, die die Wandung 32 mit dem Grundteil verbinden, sind im Ausführungsbeispiel zwei Aufnahmen 33 zwischen dem Grundteil 30 und der Wandung 32 des zweiten Befestigers 8 seitlich abgegrenzt.

Zum Einbringen jeweils eines Halters 9 sind die Aufnahmen 33 oben offen, wobei sich "oben" auf eine vorgesehene Gebrauchslage des zweiten Befestigers 8 bezieht. Unabhängig von einer Raumlage des zweiten Befestigers 8 ist "oben" die Seite, an der die Aufnahmen 33 offen sind.

Die Wandung 32, die die Aufnahmen 33 des zweiten Befestigers 8 an der Vorderseite begrenzt, weist für jede Aufnahme 33 ein oben offenes Langloch als Ausnehmung 23 für den Durchtritt des Schafts 5 auf. "Oben offen" bedeutet, dass die die Ausnehmungen 23 bildenden Langlöcher an der gleichen Seite offen sind wie die Aufnahmen 33. Die die Ausnehmungen 23 bildenden Langlöcher durchsetzen die Wandung 32 von der Außenseite 26 in die jeweilige Aufnahme 33.

Die die Ausnehmungen 23 bildenden Langlöcher in der Wandung 32 des zweiten Befestigers 8 sind breiter als der Durchmesser des Schafts 5 derart, dass der Schaft 5 zweidimensional zu seiner Achse beziehungsweise parallel zum Grundteil 30 und zur Befestigungsfläche 21 in den Ausnehmungen 23 beweglich ist.

Das Grundteil 30 des zweiten Befestigers 8 weist mit den die Ausnehmungen 23 bildenden Langlöchern deckungsgleiche, allerdings an beiden Enden geschlossene Langlöcher 35 auf, wodurch mehr Platz für das zweite Ende 13 des Schafts 5 in axialer Richtung des Schafts 5 von der Haltefläche 22 an der Rückseite der Wandung 32 bis zur Befestigungsfläche 21 und damit bis zum Befestigungsgrund 3 besteht.

Der Halter 9 ist im zweiten, in Figuren 3 und 4 dargestellten Ausführungsbeispiel des erfindungsgemäßen Befestigungssystems 1 eine rechteckige oder quadratische Lochscheibe, deren Mittelloch das Innengewinde 24 zum Einschrauben des zweiten Gewindes 12 des Schafts 5 aufweist. Der Halter 9 ist schmaler als die Aufnahmen 33 des zweiten Befestigers 8 derart, dass ebenso wie der Schaft 5 in den Ausnehmungen 23 auch der Halter 9 in den Aufnahmen 33 zweidimensional radial zu der Achse des Schafts 5 und parallel zur Befestigungsfläche 21 und zum Befestigungsgrund 3 beweglich ist. Ein Eckmaß, das heißt ein Abstand diametral gegenüberliegender Ecken des Halters 9 ist größer als die Aufnahmen 33 innen breit sind derart, dass die Halter 9 in den Aufnahmen 33 um die Achse ihres Innengewindes 24 nur so weit drehbar sind, bis eine der Ecken innen an einem der Stege 34 anstößt, der die Wandung 32 mit dem Grundteil 30 des zweiten Befestigers 8 verbindet und der die Aufnahmen 33 an drei Seiten begrenzt. Durch das Anstoßen einer Ecke des Halters 9 an einem der Stege 34 ist der Halter 9 durch Formschluss gegen Mitdrehen mit dem Schaft 5 gehalten.

Unter der Wandung 32 weist das Grundteil 30 des zweiten Befestigers 8 ein Gewinde auf, das im Ausführungsbeispiel durch eine auf das Grundteil 30 geschweißte Mutter 36 gebildet ist. An der Mutter 36 ist ein Winkel als Auflager 37 für das Anbauteil 2 befestigbar. Das Auflager 37 weist eine L-förmige Gestalt auf. Andere Befestigungsmöglichkeiten für das Auflager 37 und andere Ausführungen des Auflagers 37 sind erfindungsgemäß möglich. Beispielsweise kann das Grundteil 30 nach unten verlängert und zu einem Winkel als Auflager für das Anbauteil 2 umgebogen sein (nicht dargestellt).

Zur Befestigung des das Anbauteil 2 bildenden Rahmens an der den Befestigungsgrund 3 bildenden Gebäudewand wird der zweite Befestiger 8 des erfindungsgemäßen Befestigungssystems 1 mit der Befestigungsfläche 21 am Befestigungsgrund 3 anliegend festgelegt. Dazu weist das Grundteil 30 des zweiten Befestigers 8 Befestigungsschraubenlöcher 18 auf, die nahe an Ecken des Grundteils 30 angeordnet sind. Zum Toleranzausgleich und um den Befestiger 8 ausrichten zu können, sind die Befestigungsschraubenlöcher 18 im zweiten Ausführungsbeispiel der Erfindung dreiecksförmig mit gerundeten Ecken. Der zweite Befestiger 8 wird mit Befestigungsschrauben 25, die durch die Befestigungsschraubenlöcher 18 durchgeführt und in den Befestigungsgrund 3 eingeschraubt werden, am Befestigungsgrund 3 festgelegt. Der zweite Befestiger 8 wird so am Befestigungsgrund 3 festgelegt, dass die Aufnahmen 33 und die Ausnehmungen 23 oben offen sind.

An der Mutter 36 wird gegebenenfalls der das Auflager 37 bildende Winkel angeschraubt.

Der erste Befestiger 7 weist im zweiten Ausführungsbeispiel der Erfindung zwei rechteckige Lochscheiben 16 anstatt kreisförmiger Lochscheiben auf. Wie im ersten Ausführungsbeispiel weisen die Lochscheiben 16 kreisförmige Ringstufen auf, die die Mittellöcher der Lochscheiben 16 konzentrisch an einander zugewandten Seiten der Lochscheiben 16 umschließen. In den Ringstufen liegt der Bund 15 der Bundmutter 6 ein derart, dass die Bundmutter 6 drehbar und axialfest zwischen den den ersten Befestiger 7 bildenden Lochscheiben 16 einliegt.

Der erste Befestiger 7 wird mit Schrauben, die durch Schraubenlöcher 17 des Befestigers 7 durchgeführt sind, am Grund einer Vertiefung 28 im Anbauteil 2 festgelegt. Die Vertiefung 28 ist im zweiten Ausführungsbeispiel der Erfindung keine Senkung, sondern eine einen Rahmenschenkel des Anbauteils 2 durchsetzende Ausklinkung.

Der Schaft 5 des Befestigungssystems 1 wird durch ein Durchgangsloch im Anbauteil 2 durchgeführt, das am Grund der Vertiefung 28 mündet. Das erste Gewinde 10 des Schafts 5 kann in die Bundmutter 6 geschraubt werden, wenn der die Bundmutter 6 drehbar haltende erste Befestiger 7 am Anbauteil 2 festgelegt ist. Es kann auch der Schaft 5, dessen erstes Gewinde 10 in die Bundmutter 6 geschraubt ist, durch das Durchgangsloch im Anbauteil 2 durchgeführt werden, bis der erste Befestiger 7 am Grund der Vertiefung 28 und dann der erste Befestiger 7 durch Anschrauben am Grund der Vertiefung 28 am Anbauteil 2 festgelegt wird. Es kann der erste Befestiger 7 am Anbauteil 2 festgelegt werden, bevor oder nachdem der zweite Befestiger 8 am Befestigungsgrund 3 festgelegt worden ist.

Der Halter 9 ist oder wird auf das zweite Gewinde 12 des Schafts 5 geschraubt und das Anbauteil 2 mit dem Schaft 5 mit dem zweiten Befestiger 8 verbunden, in dem der aus dem Anbauteil 2 vorstehende Schaft 5 von oben, das heißt durch das offene Ende in die Ausnehmung 23, und der Halter 9 von oben, das heißt durch die offene Seite in die Aufnahme 33 des zweiten Befestigers 8, eingebracht wird. Das Anbauteil 2 steht auf dem Auflager 37 auf. Durch Drehen des Schafts 5 am Werkzeugsitz 29 wird die Wandung 32 zwischen dem Halter 9, der sich durch das Anstoßen einer seiner Ecken an einem der Stege 34 der Aufnahme 33 nicht mitdreht, und dem axialen Widerlager 14 am Schaft 5 festgespannt. Durch Drehen der Bundmutter 6 wird der Abstand des Anbauteils 2 vom Befestigungsgrund 3 eingestellt. Mit beispielsweise vier Befestigungssystemen 1, die nahe an Ecken des Anbauteils 2 angeordnet sind, lässt sich das Anbauteil 2 parallel zum Befestigungsgrund 3 ausrichten.

### Bezugszeichenliste

### Befestigungssystem für eine Befestigung eines Anbauteils und Verfahren zur Befestigung und Justierung des Anbauteils

- 1: Befestigungssystem
- 2: Anbauteil
- 3: Befestigungsgrund
- 4: *nicht vergeben*
- 5: Schaft
- 6: Bundmutter
- 7: erster Befestiger
- 8: zweiter Befestiger
- 9: Halter
- 10: erstes Gewinde des Schafts 5
- 11: erstes Ende des Schafts 5
- 12: zweites Gewinde des Schafts 5
- 13: zweites Ende des Schafts 5
- 14: Widerlager
- 15: Bund
- 16: Lochscheibe
- 17: Schraubenloch
- 18: Befestigungsschraubenloch
- 19: Platte
- 20: Fuß
- 21: Befestigungsfläche
- 22: Haltefläche
- 23: Ausnehmung
- 24: Innengewinde
- 25: Befestigungsschraube
- 26: Außenseite
- 27: Schraube
- 28: Vertiefung
- 29: Werkzeugsitz
- 30: Grundteil
- 31: *nicht vergeben*
- 32: Wandung
- 33: Aufnahme
- 34: Steg
- 35: Langloch
- 36: Mutter
- 37: Auflager

## Patentansprüche

1. Befestigungssystem (1) für eine Befestigung eines Anbauteils (2), insbesondere eines Rahmens aus Holz, in einem einstellbaren Abstand an einem Befestigungsgrund (3), mit einem Schaft (5), der ein erstes Gewinde (10) an einem ersten Ende (11) des Schafts (5), sowie ein axiales Widerlager (14) und ein zweites Gewinde (12) an einem dem ersten Gewinde (10) abgewandten zweiten Ende (13) aufweist, mit einer Mutter (6), die auf das erste Gewinde (10) des Schafts (5) geschraubt ist, mit einem ersten Befestiger (7), der an dem Anbauteil (2) festlegbar und an dem die Mutter (6) drehbar und axialfest gehalten ist, mit einem zweiten Befestiger (8) der eine Befestigungsfläche (21) aufweist, mit der er an dem Befestigungsgrund (3) festlegbar ist, und mit einem Halter (9), der ein Innengewinde (24) aufweist und der auf das zweite Gewinde (12) des Schafts (5) geschraubt ist, **dadurch gekennzeichnet,**
**dass** der zweite Befestiger (8) eine der Befestigungsfläche (21) zugewandte Haltefläche (22) in einem Abstand von der Befestigungsfläche (21) und eine Ausnehmung (23) für den Schaft (5) aufweist, und
**dass** der Schaft (5) in die Ausnehmung (23) des zweiten Befestigers (8) einbringbar ist, derart, dass der Schaft (5) die Ausnehmung (23) durchgreift, der Halter (9) sich zwischen der Befestigungsfläche (21) und der Haltefläche (22) des zweiten Befestigers (8) befindet und die Haltefläche (22) hintergreift und sich das Widerlager (14) auf einer der Befestigungsfläche (21) abgewandten Außenseite (26) des zweiten Befestigers (8) befindet.

2. Befestigungssystem (1) nach Anspruch 1, **dadurch gekennzeichnet, dass** die Ausnehmung (23) des zweiten Befestigers (8) an einem Ende offen ist.

3. Befestigungssystem (1) nach Anspruch 1 oder 2, **dadurch gekennzeichnet, dass** die Ausnehmung (23) des zweiten Befestigers (8) radial zum Schaft (5) größer als ein Durchmesser des Schafts (5) ist.

4. Befestigungssystem (1) nach einem oder mehreren der Ansprüche 1 bis 3, **dadurch gekennzeichnet, dass** der Halter (9) durch Formschluss gegen Drehen um eine Achse seines Innengewindes (24) an dem zweiten Befestiger (8) gehalten ist.

5. Befestigungssystem (1) nach einem oder mehreren der Ansprüche 2 bis 4, **dadurch gekennzeichnet, dass** der zweite Befestiger (8) eine an die Haltefläche (22) angrenzende, schlitzförmige Aufnahme (33) für den Halter (9) aufweist, die senkrecht zur Haltefläche (22) mindestens so breit wie der Halter (9) ist, die zu einem Einbringen des Halters (9) an derselben Seite offen ist wie die Ausnehmung (23) des zweiten Befestigers (8) für den Schaft (5) derart, dass der Schaft (5) mit dem Halter (9) in die Ausnehmung (23) einhängbar ist, und dass die Ausnehmung (23) in die Aufnahme (33) mündet.

6. Befestigungssystem (1) nach Anspruch 4 und 5, **dadurch gekennzeichnet, dass** der Halter (9) einen Mehrkant aufweist, der in Richtung der Achse des Innengewindes (24) des Halters (9) schmaler als die schlitzförmige Aufnahme (33) und dessen Eckmass radial zur Achse des Innengewindes (24) des Halters (9) größer ist, als die schlitzförmige Aufnahme (33) breit ist.

7. Befestigungssystem (1) nach einem oder mehreren der vorhergehenden Ansprüche, **dadurch gekennzeichnet, dass** der zweite Befestiger (8) zwei Ausnehmungen (23) in einem Abstand nebeneinander zur Befestigung von zwei Anbauteilen (2) nebeneinander an dem Befestigungsgrund (3) aufweist.

8. Befestigungssystem (1) nach einem oder mehreren der Ansprüche 5 bis 7, **dadurch gekennzeichnet, dass** der zweite Befestiger (8) ein Grundteil (30) und eine Wandung (32) aufweist, wobei das Grundteil (30) die Befestigungsfläche (21) und die Wandung (32) die Haltefläche (22) und die Ausnehmung (23) für den Schaft (5) aufweist und die schlitzförmige Aufnahme (33) sich zwischen dem Grundteil (30) und der Wandung (32) befindet.

9. Befestigungssystem (1) nach einem oder mehreren der vorhergehenden Ansprüche, **dadurch gekennzeichnet, dass** die Mutter (6) eine Bundmutter ist, deren Bund (15) axial zwischen zwei Lochscheiben (16) gehalten ist, in deren einander überdeckenden Löchern die Mutter (6) drehbar angeordnet ist, wobei die beiden Lochscheiben (16) gemeinsam den ersten Befestiger (7) bilden.

10. Befestigungssystem nach einem oder mehreren der vorhergehenden Ansprüche, **dadurch gekennzeichnet, dass** der Schaft (5) am ersten Ende (11) einen Werkzeugsitz (29) zu einem durch Formschluss drehfesten Ansetzen eines Drehantriebswerkzeugs aufweist.

11. Befestigungssystem (1) nach einem oder mehreren der vorhergehenden Ansprüche, **dadurch gekennzeichnet, dass** der zweite Befestiger (8) ein Auflager (37) zum Aufstellen des Anbauteils (2) aufweist.

12. Verfahren zur Befestigung und Justierung eines Anbauteils (2) in einem Abstand von einem Befestigungsgrund (3) mit dem Befestigungssystem (1) nach einem oder mehreren der vorhergehenden Ansprüche, **dadurch gekennzeichnet, dass** der erste Befestiger (7) an dem Anbauteil (2) und der zweite Befestiger (8) an dem Befestigungsgrund (3) festgelegt wird und dass der Schaft (5) in die Ausnehmung (23) des ersten Befestigers (7) eingebracht wird derart, dass der Schaft (5) die Ausnehmung (23) durchgreift, der Halter (9) sich zwischen dem Befestigungsgrund (3) und der Haltefläche (22) des zweiten Befestigers (8) befindet und die Haltefläche (22) hintergreift und sich das Widerlager (14) auf einer dem Befestigungsgrund (3) abgewandten Außenseite (26) des zweiten Befestigers (8) befindet, wodurch eine Vormontageposition gebildet ist, in welcher sich der erste Befestiger (7) mit dem Anbauteil (2) in Bezug zum zweiten Befestiger (8), der an dem Befestigungsgrund (3) festgelegt ist, ausrichten lässt.

13. Verfahren nach Anspruch 12, **dadurch gekennzeichnet, dass** nach der Befestigung des Anbauteils (2) an dem Befestigungsgrund (3) der Schaft (5) gedreht wird derart, dass der zweite Befestiger (8) zwischen dem Halter (9) und dem Widerlager (14) festgespannt wird.

14. Verfahren nach Anspruch 13, **dadurch gekennzeichnet, dass** nach dem Festspannen des zweiten Befestigers (8) zwischen dem Halter (9) und dem Widerlager (14) der Abstand des Anbauteils (2) von dem Befestigungsgrund (3) durch Drehen der Mutter (6) eingestellt wird.

15. Verfahren nach Anspruch 12, **dadurch gekennzeichnet, dass** der Schaft (5) in die Ausnehmung (23) des zweiten Befestigers (8) eingebracht und danach die Mutter (6) auf das erste Gewinde (10) des Schafts (5) geschraubt wird oder dass die Mutter (6) auf das erste Gewinde (10) des Schafts (5) geschraubt, der erste Befestiger (7) am Anbauteil (2) festgelegt und danach der Schaft (5) in die Ausnehmung (23) des zweiten Befestigers (8) eingebracht wird.

## Claims

1. Fastening system (1) for fastening an attachment part (2), in particular a frame made of wood, at an adjustable distance to a fastening base (3), having a shank (5) which comprises a first thread (10) at a first end (11) of the shank (5), and an axial abutment (14) and a second thread (12) at a second end (13) remote from the first thread (10), having a nut (6) which is screwed onto the first thread (10) of the shank (5), having a first fastener (7) which can be fastened to the attachment part (2) and on which the nut (6) is held in a rotatable and axially fixed manner, having a second fastener (8) which comprises a fastening surface (21) by means of which it can be fixed to the fastening base (3), and having a holder (9) which comprises an internal thread (24) and which is screwed onto the second thread (12) of the shank (5),
**characterized in that**
the second fastener (8) comprises a holding surface (22) facing the fastening surface (21) at a distance from the fastening surface (21), and a recess (23) for the shank (5), and
**in that** the shank (5) can be introduced into the recess (23) of the second fastener (8) in such a way that the shank (5) passes through the recess (23), the holder (9) is located between the fastening surface (21) and the holding surface (22) of the second fastener (8) and engages behind the holding surface (22), and the abutment (14) is located on an outer side (26) of the second fastener (8) facing away from the fastening surface (21).

2. Fastening system (1) according to claim 1, **characterized in that** the recess (23) of the second fastener (8) is open at one end.

3. Fastening system (1) according to either claim 1 or claim 2, **characterized in that** the recess (23) of the second fastener (8) is larger, radially relative to the shank (5), than a diameter of the shank (5).

4. Fastening system (1) according to one or more of claims 1 to 3, **characterized in that** the holder (9) is held on the second fastener (8) via a form-fit preventing rotation about an axis of the internal thread (24) thereof.

5. Fastening system (1) according to one or more of claims 2 to 4, **characterized in that** the second fastener (8) comprises a slot-shaped receptacle (33) for the holder (9), which adjoins the holding surface (22) and is at least as wide, perpendicularly to the holding surface (22), as the holder (9), which receptacle is open for insertion of the holder (9), on the same side as the recess (23) of the second fastener (8) for the shank (5), in such a way that the shank (5) can be suspended with the holder (9) in the recess (23), and that the recess (23) opens into the receptacle (33).

6. Fastening system (1) according to claims 4 and 5, **characterized in that** the holder (9) is a polygon which is narrower in the direction of the axis of the internal thread (24) of the holder (9) than the slot-shaped receptacle (33), and the corner dimensions of which, radially relative to the axis of the internal thread (24) of the holder (9), are greater than the width of the slot-shaped receptacle (33).

7. Fastening system (1) according to one or more of the preceding claims, **characterized in that** the second fastener (8) has two recesses (23), which are at a distance next to each other for fastening two attachment parts (2) next to each other to the fastening base (3).

8. Fastening system (1) according to one or more of claims 5 to 7, **characterized in that** the second fastener (8) comprises a main part (30) and a wall (32), the main part (30) comprising the fastening surface (21), and the wall (32) comprising the holding surface (22) and the recess (23) for the shank (5), and the slot-shaped receptacle (33) being located between the main part (30) and the wall (32).

9. Fastening system (1) according to one or more of the preceding claims, **characterized in that** the nut (6) is a collar nut, the collar (15) of which is held axially between two perforated disks (16), in the mutually overlapping holes of which the nut (6) is rotatably arranged, the two perforated disks (16) jointly forming the first fastener (7).

10. Fastening system according to one or more of the preceding claims, **characterized in that** the shank (5) has a tool seat (29) at the first end (11) for attaching a rotary drive tool in a rotationally fixed manner via a form-fit.

11. Fastening system (1) according to one or more of the preceding claims, **characterized in that** the second fastener (8) comprises a support (37) for placing the attachment part (2).

12. Method for fastening and adjusting an attachment part (2) at a distance from a fastening base (3) using the fastening system (1) according to one or more of the preceding claims, **characterized in that** the first fastener (7) is fixed to the attachment part (2) and the second fastener (8) is fixed to the fastening base (3) and **in that** the shank (5) is introduced into the recess (23) of the first fastener (7) in such a way that the shank (5) passes through the recess (23), the holder (9) is located between the fastening base (3) and the holding surface (22) of the second fastener (8) and engages behind the holding surface (22), and the abutment (14) is located on an outer side (26) of the second fastener (8) facing away from the fastening base (3), as a result of which a pre-assembly position is formed in which the first fastener (7) with the attachment part (2) can be aligned in relation to the second fastener (8), which is fixed to the fastening base (3).

13. Method according to claim 12, **characterized in that,** after fastening the attachment part (2) to the fastening base (3), the shank (5) is rotated in such a way that the second fastener (8) is clamped between the holder (9) and the abutment (14).

14. Method according to claim 13, **characterized in that,** after clamping the second fastener (8) between the holder (9) and the abutment (14), the distance of the attachment part (2) from the fastening base (3) is adjusted by rotating the nut (6).

15. Method according to claim 12, **characterized in that** the shank (5) is introduced into the recess (23) of the second fastener (8) and then the nut (6) is screwed onto the first thread (10) of the shank (5) or **in that** the nut (6) is screwed onto the first thread (10) of the shaft (5), the first fastener (7) is fixed to the attachment part (2) and then the shaft (5) is introduced into the recess (23) of the second fastener (8).

## Revendications

1. Système de fixation (1) destiné à la fixation d'une pièce rapportée (2), en particulier d'un cadre en bois, sur une base de fixation (3) à une distance réglable, comportant une tige (5) qui présente un premier filetage (10) à une première extrémité (11) de la tige (5) ainsi qu'une butée axiale (14) et un second filetage (12) à une seconde extrémité (13) opposée au premier filetage (10), comportant un écrou (6) qui est vissé sur le premier filetage (10) de la tige (5), comportant un premier élément de fixation (7) qui peut être fixé sur la pièce rapportée (2) et sur lequel l'écrou (6) est rotatif et maintenu immobile axialement, comportant un second élément de fixation (8) qui présente une surface de fixation (21) avec laquelle il peut être fixé sur la base de fixation (3), et comportant un élément de retenue (9) qui présente un filetage intérieur (24) et qui est vissé sur le second filetage (12) de la tige (5),
**caractérisé en ce**
**que** le second élément de fixation (8) présente une surface de retenue (22) tournée vers la surface de fixation (21) à une certaine distance de la surface de fixation (21), et un évidement (23) pour la tige (5) et
**que** la tige (5) peut être insérée dans l'évidement (23) du second élément de fixation (8) de sorte que la tige (5) traverse l'évidement (23), l'élément de retenue (9) se trouve entre la surface de fixation (21) et la surface de retenue (22) du second élément de fixation (8) et vient en prise par l'arrière avec la surface de retenue (22) et la butée (14) se trouve sur un côté extérieur (26) du second élément de fixation (8), lequel côté extérieur est opposé à la surface de fixation (21).

2. Système de fixation (1) selon la revendication 1, **caractérisé en ce que** l'évidement (23) du second élément de fixation (8) est ouvert à une extrémité.

3. Système de fixation (1) selon la revendication 1 ou 2,
**caractérisé en ce que** l'évidement (23) du second élément de fixation (8) est plus grand, radialement par rapport à la tige (5), qu'un diamètre de la tige (5).

4. Système de fixation (1) selon l'une ou plusieurs des revendications 1 à 3, **caractérisé en ce que** l'élément de retenue (9) est maintenu sur le second élément de fixation (8) par complémentarité de forme contre toute rotation autour d'un axe de son filetage intérieur (24).

5. Système de fixation (1) selon l'une ou plusieurs des revendications 2 à 4, **caractérisé en ce que** le second élément de fixation (8) présente un logement en forme de fente (33) pour l'élément de retenue (9), lequel logement est adjacent à la surface de retenue (22), est au moins aussi large que l'élément de retenue (9), dans le sens perpendiculaire à la surface de retenue (22) et, pour une insertion de l'élément de retenue (9), est ouvert du même côté que l'évidement (23) du second élément de fixation (8) pour la tige (5), de sorte que la tige (5) peut être suspendue avec l'élément de retenue (9) dans l'évidement (23) et que l'évidement (23) débouche dans le logement (33).

6. Système de fixation (1) selon les revendications 4 et 5,
**caractérisé en ce que** l'élément de retenue (9) présente un polygone qui est plus étroit que le logement en forme de fente (33) dans la direction de l'axe du filetage intérieur (24) de l'élément de retenue (9), et dont la cote d'angle radialement par rapport à l'axe du filetage intérieur (24) de l'élément de retenue (9) est plus grande que la largeur du logement en forme de fente (33).

7. Système de fixation (1) selon l'une ou plusieurs des revendications précédentes, **caractérisé en ce que** le second élément de fixation (8) présente deux évidements (23) à une certaine distance l'un de l'autre pour la fixation de deux pièces rapportées (2) côte à côte sur la base de fixation (3).

8. Système de fixation (1) selon l'une ou plusieurs des revendications 5 à 7, **caractérisé en ce que** le second élément de fixation (8) présente une partie de base (30) et une paroi (32), la partie de base (30) présentant la surface de fixation (21), la paroi (32) présentant la surface de retenue (22) et
l'évidement (23) pour la tige (5), et le logement en forme de fente (33) se trouvant entre la partie de base (30) et la paroi (32).

9. Système de fixation (1) selon l'une ou plusieurs des revendications précédentes, **caractérisé en ce que** l'écrou (6) est un écrou à embase dont l'embase (15) est maintenue axialement entre deux disques à trous (16) dans les trous en chevauchement desquels l'écrou (6) est disposé de façon rotative, les deux disques à trous (16) formant ensemble le premier élément de fixation (7).

10. Système de fixation selon l'une ou plusieurs des revendications précédentes, **caractérisé en ce que** la tige (5) présente, à la première extrémité (11), un siège d'outil (29) permettant une application verrouillée en rotation par complémentarité de forme d'un outil d'entraînement rotatif.

11. Système de fixation (1) selon l'une ou plusieurs des revendications précédentes, **caractérisé en ce que** le second élément de fixation (8) présente un support (37) permettant de monter la pièce rapportée (2).

12. Procédé de fixation et d'ajustement d'une pièce rapportée (2) à une certaine distance d'une base de fixation (3) à l'aide du système de fixation (1) selon l'une ou plusieurs des revendications précédentes, **caractérisé en ce que** le premier élément de fixation (7) est fixé à la pièce rapportée (2) et le second élément de fixation (8) est fixé à la base de fixation (3), **et en ce que** la tige (5) est insérée dans l'évidement (23) du premier élément de fixation (7) de sorte que la tige (5) traverse l'évidement (23), l'élément de retenue (9) se trouve entre la base de fixation (3) et la surface de retenue (22) du second élément de fixation (8) et vient en prise par l'arrière avec la surface de retenue (22) et la butée (14) se trouve sur un côté extérieur (26) du second élément de fixation (8), lequel côté extérieur est opposé à la base de fixation (3), moyennant quoi il se forme une position de prémontage dans laquelle le premier élément de fixation (7) peut être aligné avec la pièce rapportée (2) par rapport au second élément de fixation (8) qui est fixé à la base de fixation (3).

13. Procédé selon la revendication 12, **caractérisé en ce que,** après la fixation de la pièce rapportée (2) à la base de fixation (3), la tige (5) est mise en rotation de sorte que le second élément de fixation (8) est serré entre l'élément de retenue (9) et la butée (14).

14. Procédé selon la revendication 13, **caractérisé en ce que,** après le serrage du second élément de fixation (8) entre l'élément de retenue (9) et la butée (14), la distance entre la pièce rapportée (2) et la base de fixation (3) est réglée par rotation de l'écrou (6).

15. Procédé selon la revendication 12, **caractérisé en ce que** la tige (5) est insérée dans l'évidement (23) du second élément de fixation (8) et l'écrou (6) est ensuite vissé sur le premier filetage (10) de la tige (5), **ou en ce que** l'écrou (6) est vissé sur le premier filetage(10) de la tige (5), le premier élément de fixation (7) est fixé à la pièce rapportée (2) et la tige (5) est ensuite insérée dans l'évidement (23) du second élément de fixation (8).
